# EUROPEAN PATENT APPLICATION

(11) **EP 2 538 357 A1**
(43) Date of publication of application: **26.12.2012**
(21) Application number: 11744683.1
(22) Date of filing: 16.02.2011
(51) Int. Cl.: G06F 17/50

(54) **WIRE HARNESS CONNECTIVITY INSPECTION METHOD AND WIRE HARNESS CONNECTIVITY INSPECTION PROGRAM**

(30) Priority: 16.02.2010 JP 2010031624
(71) Applicant: Yazaki Corporation, Minato-ku Tokyo 108-8333 (JP)
(72) Inventor: KOUNO, Yoshihiro, Kurashiki-shi, Okayama (JP); SATOU, Kimihiro, Kurashiki-shi, Okayama (JP); HORI ,Sumio, Kurashiki-shi, Okayama (JP)
(74) Representative: Grünecker, Kinkeldey, Stockmair & Schwanhäusser
(86) International application number: PCT/JP2011/053301
(87) International publication number: WO 2011/102397

(57) **Abstract**

Disclosed are a wire harness continuity inspection method and a wire harness continuity inspection program capable of shortening the time required for a success/failure determination step. A first specification regarded as necessary for a first partitioned area A and a second specification regarded as necessary for a second partitioned area B are compared, the presence/absence of a shared specification is determined, and when there is at least one shared specification, region-based connector/wiring information described regarding any first wire harness arrangeable in the first partitioned area A and any second wire harness arrangeable in the second partitioned area B is created for the combination of the first wire harness and the second wire harness only.

## Description

### Technical Field

The present invention relates to a wire harness continuity inspection method and a wire harness continuity inspection program for comparing connection between the starting point and the terminating point of a circuit line described in auxiliary device-based wiring information (specifically, auxiliary device-based wiring information created for each grade of a vehicle model and depending on the presence/absence of an optional function), created for a certain vehicle model and including wiring information on electric wires and connectors connected to an auxiliary device, with connection of electric wires described in region-based connector information including connector information constituting a wire harness designated for each partitioned area and region-based wiring information including wiring information constituting the wire harnesses designated for each partitioned area (the region-based connector information is an actual wiring diagram created based on the auxiliary device-based wiring information, and the region-based wiring information is a diagram expanded based on an auxiliary device specification table of the vehicle model; hereinafter, the region-based connector information and the region-based wiring information will be collectively referred to as "region-based connector/wiring information"), and inspecting the presence/absence of an error in a connection of electric wires described in the region-based connector/wiring information.

### Background Art

When designing wire harnesses arranged in a certain vehicle, it is necessary to create a design drawing which shows connections of electric wires constituting the wire harnesses. Hereinafter, a procedure of designing wire harnesses will be described.

When designing wire harnesses which is arranged in a certain vehicle, two specifications of auxiliary device-based wiring information and an auxiliary device specification table of the vehicle are necessary. First, auxiliary device-based wiring information and an actual wiring diagram created on the basis of the auxiliary device-based wiring information will be described. In recent years, the auxiliary device-based wiring information and the actual wiring diagram have been designed by CAD (Computer Aided Design) (for example, see Patent Literature 1).

The auxiliary device-based wiring information is prepared for each of the systems, such as a head lamp system, an airbag system, an air-conditioning system, an engine control system, and an antilock brake system, which are mounted in a vehicle and separately driven. In order to drive the system, it is necessary to connect electrical components (for example, a battery, an ECU (Electronic Control Unit), and a driving machine) constituting the system by a signal line, a power line, and a ground line. The auxiliary device-based wiring information includes circuit line connection information representing terminals of an electrical component to which the starting point and the terminating point of each of the electric wires of the signal line, the power line, and the ground line are connected, and electric wires to which the signal line, the power line, and the ground line are connected, and auxiliary device information on an auxiliary device which connects the electric wires of the signal line, the power line, and the ground line to the electrical component. Since the auxiliary device-based wiring information mainly aims to represent a circuit diagram of a system having a plurality of electrical components, information on electric wires is not included therein.

Accordingly, an actual wiring diagram in which information on the electric wires is added to the auxiliary device-based wiring information is created. In the actual wiring diagram, the information on the electric wires is added to the circuit lines which connect electrical components and are described in the auxiliary device-based wiring information, and a vehicle space is functionally divided into respective areas (an engine compartment, a vehicle interior wall, or a trunk; hereinafter these areas will be referred to as partitioned areas) where wire harnesses are arrangeable. For example, when a circuit line described in the auxiliary device-based wiring information extends over a plurality of partitioned areas and is connected to a plurality of electrical components, information on terminals or connectors connected to the terminals of the electrical component at the starting point and the terminating point of the circuit line is described in the actual wiring diagram. Information on respective electric wires positioned in the partitioned areas (since wire harnesses are arranged in the respective partitioned areas, it is necessary to connect the terminals of a plurality of electrical components by connecting the electric wires of the respective partitioned areas) is also described in the actual wiring diagram. Information on auxiliary devices, such as a connector, a JB ((Electric) Junction Block or Junction Box), and a JC (Joint Connector) for connecting the end portions of electric wires positioned in the respective partitioned areas (when the end portions of electric wires are connected through welding or butt-joining, information of this effect) is described in the actual wiring diagram. The actual wiring diagram in which the information on electric wires is described in this way is created for each system mounted in the vehicle.

Subsequently, an auxiliary device specification table will be described.

In the auxiliary device specification table, the configuration (a part number of the wire harness, a combination of specifications which are applicable to the wire harness, identification information of applicable vehicles in which the wire harness is arrangeable, and arrangeable partitioned areas of the applied vehicle) of a general-purpose wire harness is described in a matrix for each wire harness.

Subsequently, region-based connector/wiring information is created on the basis of the actual wiring diagram and the auxiliary device specification table created in this way. The region-based connector/wiring information describes a wire harness arrangeable in each partitioned area of a target vehicle while including the electric wires described in the actual wiring diagram (that is, while enabling all systems mounted in the vehicle to be driven). When creating the region-based connector/wiring information, a wire harness arrangeable in the partitioned area is schematically specified from the auxiliary device specification table through a subsequent step. First, a specification code necessary for driving all the systems in the partitioned area is specified with reference to the actual wiring diagram of all systems mounted in the vehicle. A wire harness including a combination of all specifications is specified with reference to the specified specification code. This step is executed for all partitioned areas, whereby a wire harness arrangeable in each partitioned area of the target vehicle is specified.

After performing the region-based connector/wiring information creation step of creating the region-based connector/wiring information, a success/failure determination step of determining whether or not the description of the auxiliary device-based wiring information is identical to the description of the region-based connector/wiring information is performed. That is, it is determined whether or not the starting point and the terminating point of a circuit line connecting electrical components in the auxiliary device-based wiring information are identical to the starting point and the terminating point of connections of electric wires connecting electrical components in the region-based connector/wiring information.

### Citation List

### Patent Literature

Patent Literature 1: JP-A-2000-163453

### Summary of Invention

### Technical Problem

When creating the region-based connector/wiring information by specifying a wire harness arrangeable in each partitioned area of the target vehicle, there may be a plurality of candidates for the wire harness arrangeable in the partitioned area. When the vehicle space is partitioned into three partitioned areas, and candidates for a wire harness arrangeable in the partitioned area are two patterns, the region-based connector/wiring information is created in 8 (2x2x2) patterns, and the success/failure determination step should be executed for each pattern.

However, as the number of candidates for a wire harness arrangeable in a partitioned area increases, the number of patterns to be created in the region-based connector/wiring information increases. As a result, it takes a lot of time to perform the success/failure determination step which is executed on each piece of the region-based connector/wiring information.

The present invention has been accomplished in consideration of this situation, and an object of the present invention is to provide a wire harness continuity inspection method and a wire harness continuity inspection program capable of shortening the time required for the success/failure determination step.

### Solution to Problem

In order to attain the above-described object, a wire harness continuity inspection method according to the present invention is characterized by the following aspects (1) and (2).
(1) A wire harness continuity inspection method includes
   a reference step of referencing a first specification code allocated to a first partitioned area partitioning a vehicle space and a second specification code allocated to a second partitioned area partitioning the vehicle space,
   a determination step of comparing the first specification with the second specification and determining the presence/absence of a shared specification,
   a creation step of, when there is at least one shared specification, creating first region-based connector/wiring information described regarding any first wire harness arrangeable in the first partitioned area and any second wire harness arrangeable in the second partitioned area for the combination of the first wire harness and the second wire harness only, and
   an inspection step of inspecting the presence/absence of errors in connections of electric wires in the created first region-based connector/wiring information.
(2) In the creation step, when there is at least one specification shared by the first specification and a third specification allocated to a third partitioned area partitioning the vehicle space, second region-based connector/wiring information described regarding any first wire harness arrangeable in the first partitioned area and any third wire harness arrangeable in the third partitioned area is created for the combination of the first wire harness and the third wire harness only, excluding the combination of the first wire harness and the third wire harness described in the first region-based connector/wiring information created previously.

In order to attain the above-described object, a wire harness continuity inspection program according to the present invention is characterized by the following aspect (3). (3) A wire harness continuity inspection program causes a computer to execute the steps of the wire harness continuity inspection method of the aspect (1) or (2).

According to the wire harness continuity inspection method of the aspect (1) and the wire harness continuity inspection program of the aspect (3), it is possible to reduce the number of patterns to be created of region-based connector/wiring information compared to the method of the related art, thereby shortening the time required for the success/failure determination step.
According to the wire harness continuity inspection method of the aspect (2) and the wire harness continuity inspection program of the aspect (3), it is possible to further reduce the number of patterns to be created of the region-based connector/wiring information compared to the method of the related art.

### Advantageous Effects of Invention

According to the wire harness continuity inspection method and the wire harness continuity inspection program of the present invention, it is possible to shorten the time required for the success/failure determination step.

The present invention has been described briefly. The details of the present invention will be more clearly understood by reading Description of Embodiments with reference to the accompanying drawings.

### Brief Description of Drawings

Fig. 1 is a diagram for explaining an electrical component connection state, specifically, Fig. 1(a) is a schematic view of a circuit line connecting electrical components described in auxiliary device-based wiring information, and Figs. 1(b) to 1(f) are schematic views of connections of electric wires connecting electrical components described in region-based connector/wiring information.
Fig. 2 is a flowchart for explaining processing in a success/failure determination step.
Fig. 3 is a diagram for explaining the presence/absence of connection of partitioned areas in a wire harness continuity inspection method according to an embodiment of the present invention, specifically, Fig. 3(a) relates to a vehicle A, and Fig. 3(b) relates to a vehicle B.
Fig. 4 is a conceptual diagram of the number of pieces of region-based connector/wiring information on which a success/failure determination step should be executed, specifically, Fig. 4(a) relates to a vehicle A, and Fig. 4(b) relates to a vehicle B.
Fig. 5 is a diagram for explaining the relationship between a combination of wire harnesses as candidates and necessity of creating region-based connector/wiring information.
Fig. 6 is a functional block diagram of a wire harness continuity inspection device according to an embodiment of the present invention. Description of Embodiments

Hereinafter, a wire harness continuity inspection method according to an embodiment of the present invention will be described.

Prior to describing the wire harness continuity inspection method according to the embodiment of the present invention, first, an example of a success/failure determination step of determining success/failure on whether or not the starting point and the terminating point of a circuit line connecting electrical components in auxiliary device-based wiring information are identical to the starting point and the terminating point of an electric wire connecting electrical components in region-based connector/wiring information will be described.

### [Overview of Success/Failure Determination Step]

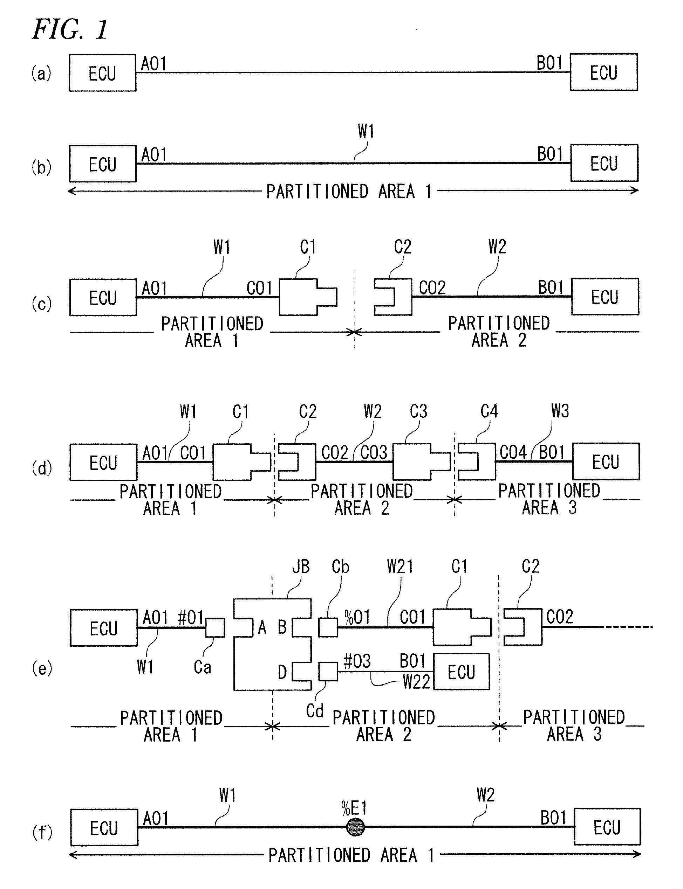

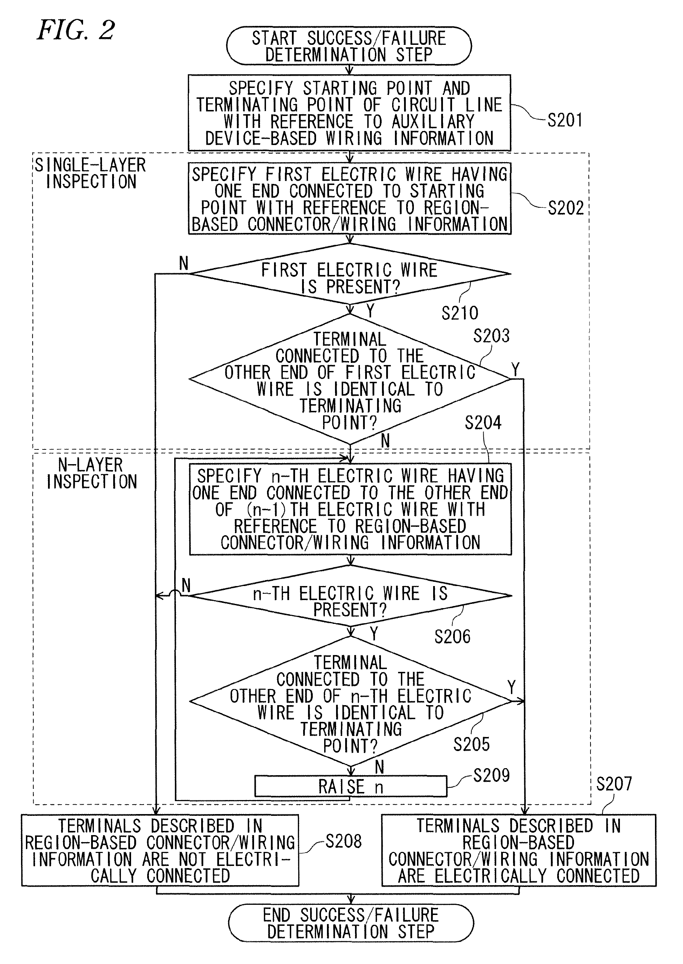

Figs. 1(a) to 1(f) are a schematic view (Fig. 1(a)) of a circuit line connecting electrical components described in auxiliary device-based wiring information, and schematic views (Figs. 1(b) to 1(f)) of connections of electric wires connecting electrical components described in region-based connector/wiring information. Fig. 2 is a flowchart for explaining processing in a success/failure determination step.
As described in "Background Art", the auxiliary device-based wiring information includes circuit line connection information representing an electrical component and terminals of the electrical component to which the starting point and the terminating point of each of the electric wires of these signal line, power line, and ground line are connected, and electric wires to which the signal line is connected. In Fig. 1(a), two ECUs which are electrical components are described, and a terminal "A01" of one of the ECUs is connected to a terminal "B01" of the other ECU through a circuit line. First, a first terminal ("A01") of a first electrical component (ECU) and a second terminal ("B01 ") of a second electrical component (ECU) connected by the circuit line described in the auxiliary device-based wiring information is referenced from the auxiliary device-based wiring information (reference step: S201).

On the other hand, as described in "Background Art", the region-based connector/wiring information describes a wire harness arrangeable in each partitioned area of a target vehicle while including the electric wires described in the actual wiring diagram (that is, while satisfying a required specification). To this end, a first electric wire having one end connected to the first terminal ("A01") of the first electrical component (ECU) described in the region-based connector/wiring information is specified on the basis of the wire harness information described in the region-based connector/wiring information with reference to the region-based connector/wiring information (first specification step: S202). In "overview of Success/Failure Determination Step", a case where the first electric wire can be specified from the region-based connector/wiring information will be hereinafter described.

In Figs. 1(b) to 1(f), the line width of the electric wire having one end connected to the first terminal ("A01") of the first electrical component (ECU) is larger than the circuit line of Fig. 1(a). In this way, the circuit line and the electric wire are distinguished from each other in Figs. 1(a) to 1(f). However, two electrical components are often arranged over a plurality of partitioned areas. In this case, respective wire harnesses arranged in respective partitioned areas are connected such that the terminals of the two electrical components are connected. Accordingly, it may not be said that the other end of the first electric wire W1 specified in the first specification step is connected to the second terminal ("B01 ") of the second electrical component (ECU) in the same partitioned area 1 as shown in Fig. 1 (b).

Accordingly, based on such a situation, first, it is determined whether or not a terminal connected to the other end of the first electric wire is identical to the second terminal ("B01") of the second electrical component (ECU) (first determination step: S203). As shown in Fig. 1(b), when it is determined that the other end of the first electric wire W1 is connected to the second terminal ("B01") of the second electrical component (ECU) in the same partitioned area 1 and is identical to the second terminal ("B01 ") of the second electrical component (ECU) described in the auxiliary device-based wiring information (S203: Y), it is regarded that the first terminal ("A01") of the first electrical component (ECU) described in the region-based connector/wiring information is electrically connected to the second terminal ("B01") of the second electrical component (ECU) (continuity success: S207). In this way, the success/failure determination step regarding the circuit line of Fig. 1(a) ends.

On the other hand, in the first determination step, there may be a case where the terminal connected to the other end of the first electric wire is not identical to the second terminal ("B01") of the second electrical component (ECU) (S203: N). In this case, the second electric wire having one end connected to the other end of the first electric wire described in the region-based connector/wiring information is specified on the basis of the wire harness information described in the region-based connector/wiring information with reference to the region-based connector/wiring information (second specification step: S204). The second specification step will be described in detail. For example, as shown in Fig. 1(c), an auxiliary device (in Fig. 1(c), a terminal "C01" is connected to the other end of the electric wire W1, and the terminal "C01" is accommodated in a connector C1) connected to the other end of the first electric wire W1 is specified from the information on a wire harness arranged in the partitioned area 1, an auxiliary device (a connector C2 in Fig. 1(c)) fitted to the connector C1 is specified from the information on a wire harness arranged in a partitioned area 2 adjacent to the partitioned area 1, and the second electric wire W2 having one end connected to a terminal "C02" connected to the terminal "C01" from among the terminals accommodated in the connector C2 is specified.

It is determined whether or not a terminal connected to the other end of the second electric wire is identical to the second terminal ("B01") of the second electrical component (ECU) (second determination step: S205). As shown in Fig. 1(c), when it is determined that the other end of the second electric wire W2 is connected to the second terminal ("B01") of the second electrical component (ECU) in the partitioned area 2, and is identical to the second terminal ("B01") of the second electrical component (ECU) described in the auxiliary device-based wiring information (S205: Y), it is regarded that the first terminal ("A01") of the first electrical component (ECU) described in the region-based connector/wiring information is electrically connected to the second terminal ("B01") of the second electrical component (ECU) (continuity success: S207). In this way, the success/failure determination step regarding the circuit line of Fig. 1(a) ends.

However, in the second determination step, there may be a case where the terminal connected to the other end of the second electric wire is not identical to the second terminal ("B01 ") of the second electrical component (ECU). In this case, a third electric wire having one end connected to the other end of the second electric wire described in the region-based connector/wiring information is specified on the basis of the wire harness information described in the region-based connector/wiring information with reference to the region-based connector/wiring information (third specification step: S204). The third specification step will be described in detail. For example, as shown in Fig. 1(d), an auxiliary device (in Fig. 1(d), a terminal "C03" is connected to the other end of the electric wire W2, and the terminal "C03" is accommodated in a connector C3) connected to the other end of the second electric wire W2 is specified from the information on a wire harness arranged in the partitioned area 2, an auxiliary device (a connector C4 in Fig. 1(d)) fitted to the connector C3 is specified from the information on a wire harness arranged in a partitioned area 3 adjacent to the partitioned area 2, and a third electric wire W3 having one end connected to the terminal "C04" connected to the terminal "C03" from among the terminals accommodated in the connector C4 is specified.

It is determined whether or not a terminal connected to the other end of the third electric wire is identical to the second terminal ("B01") of the second electrical component (ECU) (third determination step: S205). As shown in Fig. 1(d), when it is determined that the other end of the third electric wire W3 is connected to the second terminal ("B01") of the second electrical component (ECU) in the partitioned area 3, and is identical to the second terminal ("B01 ") of the second electrical component (ECU) described in the auxiliary device-based wiring information, it is regarded that the first terminal ("A01") of the first electrical component (ECU) described in the region-based connector/wiring information is electrically connected to the second terminal ("B01") of the second electrical component (ECU) (continuity success: S207). In this way, the success/failure determination step regarding the circuit line of Fig. 1(a) ends.

In the third determination step (S205), when the terminal connected to the other end of the third electric wire is not identical to the second terminal ("B01 ") of the second electrical component (ECU), if the wire harness information described in the region-based connector/wiring information includes information on the fourth, fifth, ..., and n-th electric wires W4, W5, ... , and Wn, the fourth, fifth, ... , and n-th specification steps (S204) and the fourth, fifth, ... , and n-th determination steps (S205) are sequentially performed while raising n (S209) (where n is an integer of 2 or more).

On the other hand, when the information on the electric wire Wn connected to the electric wire W(n-1) is not present in the wire harness information described in the region-based connector/wiring information (S206: N; where n is an integer of 2 or more), and in the n-th specification step, it is not possible to specify the n-th electric wire Wn, such that the (n-1)th electric wire W(n-1) is not identical to the second terminal ("B01 ") of the second electrical component (ECU) described in the auxiliary device-based wiring information, it is regarded that the first terminal ("A01 ") of the first electrical component (ECU) described in the region-based connector/wiring information is not electrically connected to the second terminal ("B01") of the second electrical component (ECU) (continuity fail: S208). In this way, the success/failure determination step regarding the circuit line of Fig. 1(a) ends.

In Figs. 1(a) to 1(d), an overview of a case where connectors of respective wire harnesses arranged in respective partitioned areas are connected together to form electric wires connected over a plurality of partitioned areas, and the terminals of two electrical components are connected by the electric wires has been mainly described. In addition to connecting the electric wires over a plurality of partitioned areas by a connector, there is a case where electric wires are connected through a JB or a JC (see Fig. 1(e)). There is also a case where a plurality of electric wires are connected in a single partitioned area (see Fig. 1(f)). These two cases will be described. First, a case where the electric wires are connected through a JB will be described. The first specification step (S202) and the first determination step (S203) are the same as those of the case where the electric wires are connected over a plurality of partitioned areas by a connector, and description thereof will not be repeated. The reasoning of the case where the electric wires are connected through a JC is the same as that of the case where the electric wires are connected through a JB, and description thereof will not be repeated.

A case where in the first determination step (S203), the terminal connected to the other end of the first electric wire is not identical to the second terminal ("B01") of the second electrical component (ECU) (S203: N) will be described. In this case, the second electric wire having one end connected to the other end of the first electric wire described in the region-based connector/wiring information is specified on the basis of the wire harness information described in the region-based connector/wiring information with reference to the region-based connector/wiring information (second specification step: S204). The second specification step will be described in detail. As shown in Fig. 1(e), an auxiliary device (in Fig. 1(e), a terminal "#01" is connected to the other end of the electric wire W1, and the terminal "#01" is accommodated in a connector Ca) connected to the other end of the first electric wire W1 is specified from the information on a wire harness arranged in the partitioned area 1, and a JB having a connector fitting position A fitted to the connector Ca is specified from a correspondence table. Connector fitting positions B and D connected to the connector fitting position A through an electric wire or a bus bar in the JB are specified, and second electric wires W21 and W22 having one set of ends connected to terminals "%01" and "#03" accommodated in respective connectors Cb and Cd to which the respective connector fitting positions B and D are fitted are specified.

It is determined whether or not a terminal connected to the other end of the second electric wire is identical to the second terminal ("B01") of the second electrical component (ECU) (second determination step: S205). As shown in Fig. 1(e), when it is determined that the other end of the second electric wire W21 or W22 is connected to the second terminal ("B01") of the second electrical component (ECU) in the partitioned area 2, and is identical to the second terminal ("B01") of the second electrical component (ECU) described in the auxiliary device-based wiring information, it is regarded that the first terminal ("A01") of the first electrical component (ECU) described in the region-based connector/wiring information is electrically connected to the second terminal ("B01") of the second electrical component (ECU) (continuity success: S207). In this way, the success/failure determination step regarding the circuit line of Fig. 1(e) ends.

When the electric wires are connected through a JB (or a JC), since a number of electric wires may be connected to a single electric wire, it is necessary to determine whether or not the other end of each of these electric wires is identical to the terminating point of the circuit line. This is different from a case where the electric wires are connected over a plurality of partitioned areas by a connector.

Subsequently, a case where a plurality of electric wires are connected in a single partitioned area will be described. The first specification step (S202) and the first determination step (S203) are the same as those of the case where the electric wires are connected over a plurality of partitioned areas by a connector, and description thereof will not be repeated.

A case where in the first determination step (S203), the terminal connected to the other end of the first electric wire is not identical to the second terminal ("B01") of the second electrical component (ECU) (S203: N) will be described. In this case, the second electric wire having one end connected to the other end of the first electric wire described in the region-based connector/wiring information is specified on the basis of the wire harness information described in the region-based connector/wiring information with reference to the region-based connector/wiring information (second specification step: S204). The second specification step will be described in detail. For example, as shown in Fig. 1(f), a connection point (in Fig. 1(f), the other end of the electric wire W1 is connected to one end of another electric wire, for example, through welding or butt-joining, and "%E1" is allocated as a number identifying the welding or butt-joining point) connected to the other end of the first electric wire W1 is specified from the information on a wire harness arranged in the partitioned area 1, and the second electric wire W2 having one end connected to the connection point "%E1" is specified.

It is determined whether or not the terminal connected to the other end of the second electric wire is identical to the second terminal ("B01") of the second electrical component (ECU) (second determination step: S205). As shown in Fig. 1(f), when it is determined that the other end of the second electric wire W2 is connected to the second terminal ("B01 ") of the second electrical component (ECU) in the partitioned area 1, and is identical to the second terminal ("B01") of the second electrical component (ECU) described in the auxiliary device-based wiring information, it is regarded that the first terminal ("A01") of the first electrical component (ECU) described in the region-based connector/wiring information is electrically connected to the second terminal ("B01") of the second electrical component (ECU) (continuity success: S207). In this way, the success/failure determination step regarding the circuit line of Fig. 1(f) ends.

Hereinabove, the processing of the success/failure determination step has been described. As described with reference to Figs. 1(a) to 1(f), the starting point and the terminating point of the circuit line are specified with reference to the auxiliary device-based wiring information and it is recursively analyzed whether or not the other end of the first electric wire having one end connected to the starting point of the circuit line specified with reference to the region-based connector/wiring information or the other end of the n-th electric wire (where n is an integer of 2 or more) having one end connected to the other end of the (n-1)th electric wire is identical to the terminating point of the circuit line, or the n-th electric wire Wn is not present, such that that the (n-1)th electric wire W(n-1) is not identical to the terminating point of the circuit line. As above, the processing for specifying the electric wires of the first electric wire W1, the second electric wire W2, ... , and the N-th electric wire WN and the processing for determining whether or not the other end of each of these electric wires is identical to the terminating point of the circuit line will be collectively referred to as "multilayer inspection". During the "multilayer inspection", the processing for specifying the first electric wire W1 having one end connected to the starting point of the circuit line (first specification step: S202) and determining whether or not the other end of the electric wire W1 is identical to the terminating point of the circuit line (first determination step: S203) will be referred to as "single-layer inspection". The processing for specifying the n-th electric wire Wn (where n is an integer of 2 or more) (n-th specification step: S204) and determining whether or not the other end of the electric wire Wn is identical to the terminating point of the circuit line (n-th determination step: S205) will be referred to as "n-layer inspection" along with the processing of S206 and S209. For example, Fig. 1(b) shows a case where it is determined by single-layer inspection that the other end of the first electric wire W1 is identical to the terminating point of the circuit line. Figs. 1(c), 1(e), and 1(f) show a case where it is determined by two-layer inspection that the other end of the second electric wire W2 (the second electric wire W22 in the case of Fig. 1(e)) is identical to the terminating point of the circuit line. Fig. 1(d) shows a case where it is determined by three-layer inspection that the other end of the third electric wire W3 is identical to the terminating point of the circuit line.

The success/failure determination step which is applicable to the wire harness continuity inspection method according to the embodiment of the present invention is not limited to that described in [Overview of Success/Failure Determination Step]. It should be noted that the success/failure determination step described in [Overview of Success/Failure Determination Step] is just an example.

### [Combination Narrowing Step]

### [Object of Combination Narrowing Step]

As described in [Overview of Success/Failure Determination Step], in the success/failure determination step, the presence/absence of electric continuity is inspected using a batch of auxiliary device-based wiring information (a batch of auxiliary device-based wiring information has a plurality of pieces of auxiliary device-based wiring information which are respectively designated for the systems, such as a head lamp system, an airbag system, an air-conditioning system, an engine control system, and an antilock brake system, to be separately driven) referenced in the reference step S201 and a batch of region-based connector/wiring information (a batch of region-based connector/wiring information has a plurality of pieces of region-based connector/wiring information in which one wire harness is designated in each partitioned area) referenced in the first determination step S202 and the second determination step S204.

At this time, as described in [Technical Problem], when there are a plurality of candidates for a wire harness arrangeable in a certain partitioned area. It is necessary that one of the candidates creates a batch of region-based connector/wiring information arranged in the partitioned area, and the success/failure determination step is executed on each piece of region-based connector/wiring information. For example, when the number of candidates for a wire harness arrangeable in a partitioned area A is three of A-1, A-2, and A-3, it is necessary that one of the candidates A-1, A-2, and A-3 for the wire harness creates a batch of region-based connector/wiring information arranged in the partitioned area A by three pieces in total, and the success/failure determination step is executed on each piece of region-based connector/wiring information. For example, when the number of candidates for a wire harness arrangeable in the partitioned area A is three of A-1, A-2, and A-3, and candidates for a wire harness arrangeable in a partitioned area B are three of B-1, B-2, and B-3, it is necessary that one of the candidates A-1, A-2, and A-3 for the wire harness arrangeable in the partitioned area A creates and one of the candidates B-1, B-2, and B-3 for the wire harness arrangeable in the partitioned area B create a batch of region-based connector/wiring information arranged in the partitioned area A and the partitioned area B by nine pieces (3x3) in total, and the success/failure determination step is executed on each piece of region-based connector/wiring information. In summary, when the number of candidates for an arrangeable wire harness in the partitioned area A is a, and the number of candidates for an arrangeable wire harness in the partitioned area B is b, and the number of candidates for an arrangeable wire harness in a partitioned area C is c, ..., it is necessary that a batch of region-based connector/wiring information is created by the number (axbxcx...) of combinations, and the success/failure determination step is executed on each piece of region-based connector/wiring information. The number of combinations depends on a vehicle, and may be equal to or greater than 100,000.

However, as the number of candidates for a wire harness arrangeable in a partitioned area increases, a batch of region-based connector/wiring information increases. As a result, it takes a lot of time to perform the success/failure determination step which is executed on each piece of a batch of region-based connector/wiring information. The object of the combination narrowing step described above is to efficiently reduce the number of pieces of a batch of region-based connector/wiring information subjected to the success/failure determination step without lowering the accuracy of the success/failure determination step, thereby shortening the time required for the success/failure determination step.

### [Overview of Combination Narrowing Step]

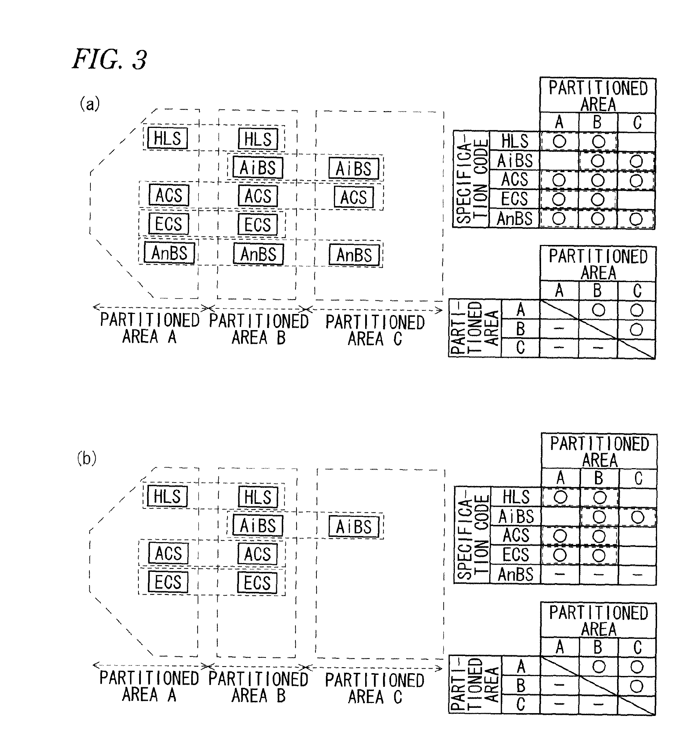

An overview of a combination narrowing step will be described with reference to diagrams for explaining the presence/absence of connections in partitioned areas in the wire harness continuity inspection method according to the embodiment of the present invention shown in Figs. 3(a) and 3(b).
Figs. 3(a) and 3(b) show a state where the vehicle space is partitioned into three areas of partitioned areas A, B, and C. It is assumed that the vehicle space of a vehicle model is specified depending on the presence/absence of a grade and an optional function. If a vehicle model is specified, the systems, such as a head lamp system, an airbag system, an air-conditioning system, an engine control system, and an antilock brake system, which are mounted in a vehicle and separately driven are specified. In this description, a set of systems which should be clearly filled in a certain vehicle is defined as "specification", and information for identifying an individual system constituting the set is referred to as "specification code".

Fig. 3(a) assumes a vehicle A in which a head lamp system (represented by a specification code "HLS"), an airbag system (represented by a specification code "AiBS"), an air-conditioning system (represented by a specification code "ACS"), an engine control system (represented by a specification code "ECS"), and an antilock brake system (represented by a specification code "AnBS") are filled as specifications. Fig. 3(b) assumes a vehicle B in which a head lamp system (represented by a specification code "HLS"), an airbag system (represented by a specification code "AiBS"), an air-conditioning system (represented by a specification code "ACS"), an engine control system (represented by a specification code "ECS") are filled as specifications. It is assumed that the vehicle A and the vehicle B are the same vehicle, and are vehicle models in which the presence/absence of a grade and an optional function is different.

In a vehicle in which the vehicle space is partitioned into a plurality of partitioned areas, a specification code is allocated to each partitioned area where a wire harness for driving a system identified by the specification code should be arranged. For example, in the vehicle shown in Fig. 3(a), a specification code identifying a head lamp system is allocated to the partitioned areas A and B, a specification code identifying an airbag system is allocated to the partitioned areas B and C, a specification code identifying an air-conditioning system is allocated to the partitioned areas A, B, and C, a specification code identifying an engine control system is allocated to the partitioned areas A and B, and a specification code identifying an antilock brake system is allocated to the partitioned areas A, B, and C. For example, in the vehicle B shown in Fig. 3(b), a specification code identifying a head lamp system is allocated to the partitioned areas A and B, a specification code identifying an airbag system is allocated to the partitioned areas B and C, a specification code identifying an air-conditioning system is allocated to the partitioned areas A and B, and a specification code identifying an engine control system is allocated to the partitioned areas A and B.

Subsequently, the relationship of the specification codes is given focusing on two partitioned areas. In the vehicle A shown in Fig. 3(a), the specification codes "HLS", "ACS", "ECS", and "AnBS" are shared by the partitioned area A and the partitioned area B, the specification codes "AiBS", "ACS", and "AnBS" are shared by the partitioned area B and the partitioned area C, and the specification codes "ACS" and "AnBS" are shared by the partitioned area C and the partitioned area A. In this way, when at least one specification code is shared by a certain partitioned area X and another partitioned area Y, hereinafter, it is regarded that "there is a connection between the partitioned areas X and Y". When this happens, in the vehicle A shown in Fig. 3(a), it can be said that there are connections between the partitioned area A and the partitioned area B, between the partitioned area B and the partitioned area C, and between the partitioned area C and the partitioned area A.

In the vehicle B shown in Fig. 3(b), the specification codes "HLS", "ACS", and "ECS" are shared by the partitioned area A and the partitioned area B, and the specification code "AiBS" is shared by the partitioned area B and the partitioned area C. There is no specification code shared by the partitioned area C and the partitioned area A. When this happens, in the vehicle B shown in Fig. 3(b), while it can be said that there are connections between the partitioned area A and the partitioned area B and between the partitioned area B and the partitioned area C, unlike the vehicle A shown in Fig. 3(a), there is no connection between the partitioned areas C and A.

In the combination narrowing step of the wire harness continuity inspection method according to the embodiment of the present invention, the presence/absence of a connection between two partitioned areas is determined, and on the basis of the determination, the number of patterns of a batch of region-based connector/wiring information subjected to the success/failure determination step is reduced.

That is, in the vehicle B shown in Fig. 3(b), there is no specification code shared by the partitioned area C and the partitioned area A, and there is no connection, there is no electric wire which connects electrical components disposed in the partitioned areas A and C, and accordingly, it is not necessary to perform continuity inspection of a wire harness arrangeable in each of the partitioned areas A and C.

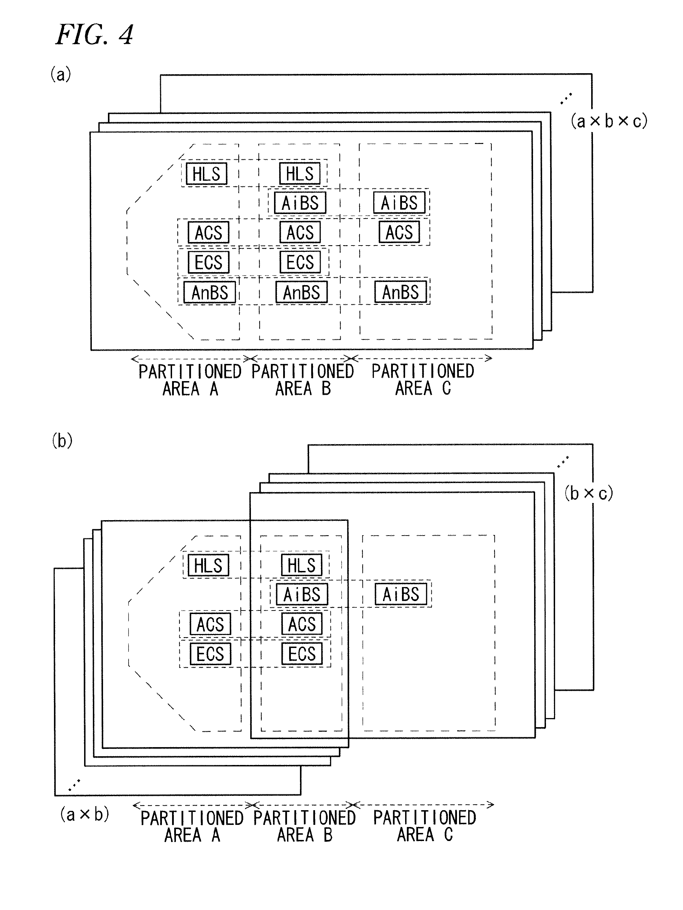

In the vehicle A shown in Fig. 3(a), since there are connections between the partitioned areas A and B, between the partitioned areas B and C, and the partitioned areas C and A, it is necessary to perform continuity inspection of a wire harness arrangeable in each of the partitioned areas A and B, continuity inspection of a wire harness arrangeable in each of the partitioned areas B and C, and continuity inspection of a wire harness arrangeable in each of the partitioned areas A and C. For this reason, a batch of region-based connector/wiring information respectively designated in the partitioned areas A, B, and C should be created. As a result, in the vehicle A shown in Fig. 3(a), like a conceptual diagram shown in Fig. 4(a) regarding the number of pieces of region-based connector/wiring information subjected to the success/failure determination step of the vehicle A, when the number of candidates for an arrangeable wire harness in the partitioned area A is a, the number of candidates for an arrangeable wire harness in the partitioned area B is b, and the number of candidates for an arrangeable wire harness in the partitioned area C is c, it is necessary that a batch of region-based connector/wiring information is created by the number (axbxc) of combinations, and the success/failure determination step is executed on each of (axbxc) pieces of region-based connector/wiring information.

In the vehicle B shown in Fig. 3(b) in which there is no specification code shared by the partitioned area C and the partitioned area A, and there is no connection, if it is assumed that the number of candidates for an arrangeable wire harness in the partitioned area A is a, the number of candidates for an arrangeable wire harness in the partitioned area B is b, and the number of candidates for an arrangeable wire harness in the partitioned area C is c, ..., like a conceptual diagram shown in Fig. 4(b) regarding the number of pieces of region-based connector/wiring information subjected to the success/failure determination step of the vehicle B, a batch of region-based connector/wiring information respectively designated in the partitioned areas A and B may be created by (axb) pieces, a batch of region-based connector/wiring information respectively designated in the partitioned areas B and C may be created by (bxc) pieces, and the success/failure determination step may be executed on each of {(axb)+(bxc)} pieces of region-based connector/wiring information.

For example, a case where the number of candidates for an arrangeable wire harness in the partitioned area A is 3, the number of candidates for an arrangeable wire harness in the partitioned area B is 3, and the number of candidates for an arrangeable wire harness in the partitioned area C is 3 is considered. According to a method in which the presence/absence of a connection between two partitioned areas is not taken into consideration, the success/failure determination step should be executed on each of 27 (3x3x3) pieces of region-based connector/wiring information. In the present invention in which the presence/absence of a connection between two partitioned areas is taken into consideration, the success/failure determination step may be executed on each of 18 (3x3+3x3) pieces of region-based connector/wiring information. As a result, according to the present invention, 9 pieces of region-based connector/wiring information may not be created, and accordingly, it is possible to shorten the time required for the success/failure determination step on each of the nine pieces of region-based connector/wiring information.

### [Details of Combination Narrowing Step]

In particular, processing for determining the presence/absence of a connection between two partitioned areas will be described in detail.

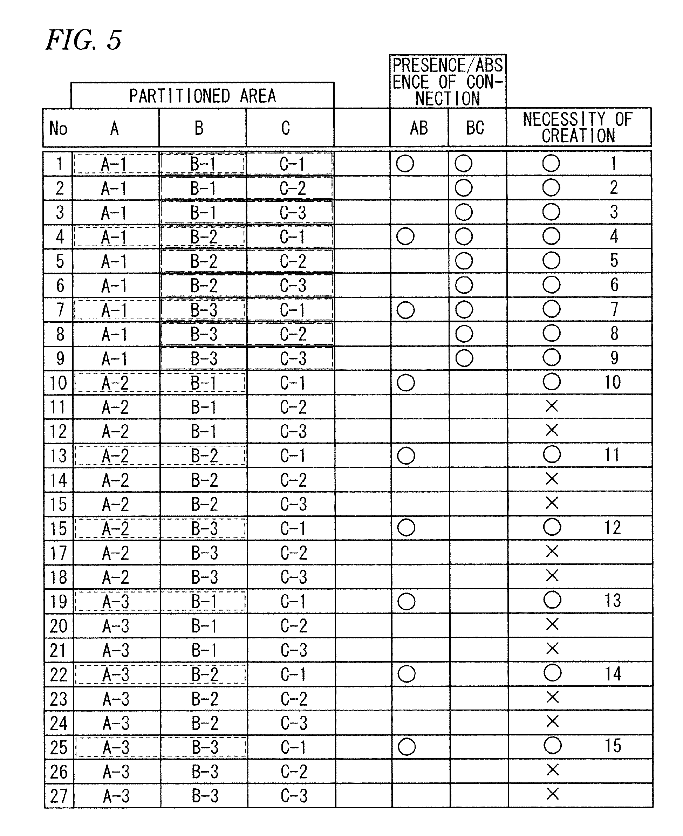

In [Overview of Combination Narrowing Step], it has been described that, like the vehicle B shown in Fig. 3(b), when there are connections between the partitioned areas A and B and between the partitioned areas B and C, and there is no connection between the partitioned areas C and A, it is possible to reduce the number of patterns to be crated of the region-based connector/wiring information created in each success/failure determination step. Hereinafter, the details will be described with reference to a diagram for explaining the relationship between a combination of wire harnesses as candidates and necessity of creating region-based connector/wiring information shown in Fig. 5. Similarly to the case described in [Overview of Combination Narrowing Step], a case where there are three partitioned areas and there is no connection between a set of two partitioned areas C and A will be described.

In [Overview of Combination Narrowing Step], it has been described that, when candidates for a wire harness arrangeable in the partitioned area A are three of A-1, A-2, and A-3, candidates for a wire harness arrangeable in the partitioned area B are three of B-1, B-2, and B-3, and candidates for a wire harness arrangeable in the partitioned area C are three of C-1, C-2, and C-3, if there is no connection between the partitioned areas C and A, a batch of region-based connector/wiring information in which a wire harness is designated in each of the two partitioned areas A and B is created by (3x3) pieces, and a batch of region-based connector/wiring information in which a wire harness is designated in each of the two partitioned areas B and C is created by (3x3) pieces. This point will be described.

Fig. 5 describes all combinations (No. 1 to No. 27) of the candidates A-1, A-2, and A-3 for a wire harness arrangeable in the partitioned area A, the candidates B-1, B-2, and B-3 for a wire harness arrangeable in the partitioned area B, and the candidates C-1, C-2, and C-3 for a wire harness arrangeable in the partitioned area C. Of these, the combinations of wire harnesses arrangeable in the partitioned area A and the partitioned area B between which there is a connection include the following nine patterns.
(A-1, B-1)
(A-1,B-2)
(A-1,B-3)
(A-2,B-1)
(A-2,B-2)
(A-2, B-3)
(A-3, B-1)
(A-3, B-2)
(A-3,B-3)
For this reason, when creating a batch of region-based connector/wiring information respectively designated in the partitioned area A and the partitioned area B, of the combinations of No. 1 to No. 27, nine pieces of region-based connector/wiring information in which one of No. 1 to No. 3, one of No. 4 to No. 6, one of No. 7 to No. 9, one of No. 10 to No. 12, one of No. 13 to No. 15, one of No. 16 to No. 18, one of No. 19 to No. 21, one of No. 22 to No. 24, and one of No. 25 to No. 27 are included in the combinations are created. In Fig. 5, the patterns of No. 1, No. 4, No. 7, No. 10, No. 13, No. 16, No. 19, No. 22, and No. 25 are selected.

Similarly, the combinations of wire harnesses arrangeable in the partitioned area B and the partitioned area C between which there is a connection include the following nine patterns.
(B-1, C-1)
(B-1, C-2)
(B-1, C-3)
(B-2, C-1)
(B-2,C-2)
(B-2,C-3)
(B-3,C-1)
(B-3,C-2)
(B-3,C-3)
   For this reason, when creating a batch of region-based connector/wiring information respectively designated in the partitioned area B and the partitioned area C, of the combinations of No. 1 to No. 27, nine pieces of region-based connector/wiring information in which one of Nos. 1, 10, and 19, one of Nos. 2, 11, and 20, one of Nos. 3, 12, and 21, one of Nos. 4, 13, and 22, one of Nos. 5, 14, and 23, one of Nos. 6, 15, and 24, one of Nos. 7, 16, and 25, one of Nos. 8, 17, and 26, and one of Nos. 9, 18, and 27 are included in the combinations are created. In Fig. 5, the patterns of No. 1, No. 2, No. 3, No. 4, No. 5, No. 6, No. 7, No. 8, and No. 9 are selected.

In regard to the combinations of wire harnesses arrangeable in the partitioned area C and the partitioned area A between which there is no connection, the selection conditions of the patterns are not satisfied.

In this way, the region-based connector/wiring information including the combinations selected from No. 1 to No. 27 is created, and the success/failure determination step is executed on each piece of region-based connector/wiring information. In Fig. 5, areas surrounded by two kinds of dotted lines indicate the combinations.

It is understood that, of the combinations of No. 1 to No. 27 of Fig. 5, the combinations of No. 1, No. 4, and No. 7 include both the combination of the partitioned areas A and B between which there is a connection and the combination of the partitioned areas B and C. For this reason, actually, 15 pieces of region-based connector/wiring information may be created, excluding the overlapping three patterns.

As above, according to the wire harness continuity inspection method according to the embodiment of the present invention, it is possible to reduce the number of pieces of region-based connector/wiring information to be created compared to the method of related art, thereby shortening the time required for the success/failure determination step.

Although a case where there are three partitioned areas, and there is no connection between a set of two partitioned areas has been described, the present invention may be applied to a case where there are four or more partitioned areas and there is no connection between one or more sets of two partitioned areas. That is, of all the combinations of wire harnesses arrangeable in the respective partitioned areas, the patterns including the combinations of wire harnesses arrangeable in two partitioned areas between there is a connection may be selected for every two partitioned areas between which there is a connection.

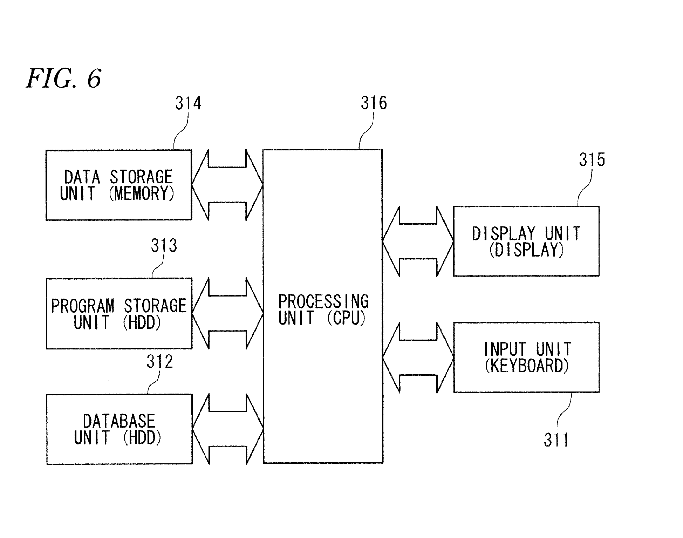

Hereinafter, the configuration of a wire harness continuity inspection device according to the embodiment of the present invention will be described. First, the configuration of the wire harness continuity inspection device according to the embodiment of the present invention will be described with reference to a functional block diagram of the wire harness continuity inspection according to the embodiment of the present invention shown in Fig. 6.

### [Configuration of Wire harness continuity Inspection Device]

The wire harness continuity inspection device according to the embodiment of the present invention includes an input unit 311, a database unit 312, a program storage unit 313, a data storage unit 314, a display unit 315, and a processing unit 316. When the wire harness continuity inspection device of the present invention is configured by a general-purpose PC, for example, the input unit 311 is realized by various input interfaces, such as a keyboard, a mouse, or a number pad. The database unit 312 and the program storage unit 313 are realized by a hard disk drive (HDD), the data storage unit 314 is realized by a RAM (Random Access Memory), the display unit 315 is realized by various output devices, such as a CRT display or a liquid crystal display, and the processing unit 316 is realized by a CPU (Central Processing Unit). Data of the auxiliary device-based wiring information, data of the region-based connector/wiring information (if necessary, data of the actual wiring diagram created on the basis of the auxiliary device-based wiring information), and data of the auxiliary device specification table are stored in the database unit 312. A program which causes the processing unit 316 to execute the multilayer inspection and the combination narrowing step are recorded in the program storage unit 313. Data input and output to and from the processing unit 316 executing the multilayer inspection and the combination narrowing step are recorded in the data storage unit 314. A person who instructs the wire harness continuity inspection device of the present invention to execute the multilayer inspection and the combination narrowing step performs various operations for allowing the processing unit 316 to perform computation using the input unit 311 while viewing the display unit 315.

While the present invention has been described in detail with reference to specific embodiments, it is obvious to those skilled in the art that various changes and modifications can be made without departing from the spirit and scope of the present invention.

This application is based on Japanese Patent Application No. 2010-031624, filed on February 26, 2010, the entire contents of which are incorporated by reference herein.

### Reference Signs List

311: INPUT UNIT
312: DATABASE UNIT
313: PROGRAM STORAGE UNIT
314: DATA STORAGE UNIT
315: DISPLAY UNIT
316: PROCESSING UNIT

## Claims

1. A wire harness continuity inspection method comprising:
a reference step of referencing a first specification code allocated to a first partitioned area partitioning a vehicle space and a second specification code allocated to a second partitioned area partitioning the vehicle space;
a determination step of comparing the first specification with the second specification and determining the presence/absence of a shared specification;
a creation step of, when there is at least one shared specification, creating first region-based connector/wiring information described regarding any first wire harness arrangeable in the first partitioned area and any second wire harness arrangeable in the second partitioned area for the combination of the first wire harness and the second wire harness only; and
an inspection step of inspecting the presence/absence of an error in a connection of electric wires in the created first region-based connector/wiring information.

2. The wire harness continuity inspection method according to claim 1, wherein, in the creation step, when there is at least one specification shared by the first specification and a third specification allocated to a third partitioned area partitioning the vehicle space, second region-based connector/wiring information described regarding any first wire harness arrangeable in the first partitioned area and any third wire harness arrangeable in the third partitioned area is created for the combination of the first wire harness and the third wire harness only, excluding the combination of the first wire harness and the third wire harness described in the first region-based connector/wiring information created previously.

3. A program which causes a computer to execute the steps of the wire harness continuity inspection method according to claim 1 or 2.
